# EUROPEAN PATENT APPLICATION

(11) **EP 4 507 180 A1**
(43) Date of publication of application: **12.02.2025**
(21) Application number: 23777577.0
(22) Date of filing: 06.01.2023
(51) Int. Cl.: H02M 3/335

(54) **POWER SOURCE CONVERSION APPARATUS AND SYSTEM**

(30) Priority: 01.04.2022 CN 202210338699
(71) Applicant: ZHEJIANG EV-TECH CO., LTD., Huzhou, Zhejiang 310012 (CN)
(72) Inventor: HAO, Shiqiang, Huzhou, Zhejiang 310012 (CN); PING, Dinggang, Huzhou, Zhejiang 310012 (CN)
(74) Representative: Michalski Hüttermann & Partner Patentanwälte mbB
(86) International application number: PCT/CN2023/071011
(87) International publication number: WO 2023/185198

(57) **Abstract**

Provided in the present disclosure is a power conversion device and system, relating to the field of power supply. A control unit is provided to receive a first sampling signal and a second sampling signal that represent states of a power converter, and is configured to generate a first switch driving signal according to the first sampling signal, obtain a turn-on moment phase-shift angle and a turn-off moment phase-shift angle according to the second sampling signal, delay a turn-on moment of the first switch driving signal by a turn-on moment phase-shift angle, and delay a turn-off moment by a turn-off moment phase-shift angle so as to obtain a second switch driving signal, wherein when a gain of the power converter is greater than or equal to 1, the turn-on moment phase-shift angle is equal to the turn-off moment phase-shift angle, and during a period when switching tubes in a secondary side switching unit are turned on, a current in the secondary side switching unit is reversed, and at the same time, a voltage withstood by the secondary winding of the transformer is reversed to form a reverse voltage. Therefore, the output voltage range of the power converter can be expanded, and the power converter has good EMI characteristics and high efficiency, and is simple to control.

## Description

### TECHINCAL FIELD

The present disclosure relates to the field of power supply, and in particular to a power conversion device and system.

### BACKGROUND

High-frequency isolated DC-DC converters are widely used in many applications, such as server power supplies and on-board chargers.

Miniaturization and high frequency are the development trends of the power converters. However, the increase of switching frequency leads to the increase of switching loss of the switching tubes, which results in low efficiency of the power converters. Resonant converters are widely used since they can realize zero-voltage switching-on or zero-current switching-off, and thus the efficiency of the power converters are improved. Generally, the resonant converters use frequency modulation and phase shift modulation techniques to stabilize an output voltage and improve the converter efficiency.

In many practical applications, such as for on-board chargers, the battery voltage will change in a large range in a battery charging process, therefore, it also desired that the high-frequency isolated DC-DC converter can achieve a wide output voltage range while maintaining high efficiency in a full load range.

However, the current high-frequency isolated DC-DC converter and its control solution cannot achieve the wide output voltage range and the high efficiency at the same time, or the control is extremely complicated and the reliability is poor.

### SUMMARY

The present application provides a power conversion device including a power converter, the power converter including: a resonant circuit, wherein the resonant circuit includes a transformer and a resonant unit, the transformer includes a primary winding and a secondary winding; a primary side switching unit, wherein the primary side switching unit includes at least one switching tube and is connected to both ends of the primary winding, and a first voltage is formed at both ends of the primary side switching unit; a secondary side switching unit, wherein the secondary side switching unit includes at least one switching tube and is connected to both ends of the secondary winding, and a second voltage is formed at both ends of the secondary side switching unit, wherein the resonant unit is connected between any end of the primary winding and the primary side switching unit or between any end of the secondary winding and the secondary side switching unit; and a control unit which receives a first sampling signal representing a state of the power converter and a second sampling signal representing a state of the power converter, and is configured to: generate a first switch driving signal for controlling the switching tube in the primary side switching unit to be turned on or off according to the first sampling signal, obtain a turn-on moment phase-shift angle and a turn-off moment phase-shift angle according to the second sampling signal, and delay the turn-on moment of the first switch driving signal by the turn-on moment phase-shift angle and delay the turn-off moment of the first switch driving signal by the turn-off moment phase-shift angle so as to obtain a second switch driving signal for controlling turn-on or turn-off of the switching tube in the secondary side switching unit, wherein when a gain of the power converter is greater than or equal to 1, the turn-on moment phase-shift angle is equal to the turn-off moment phase-shift angle, and the turn-on moment phase-shift angle and the turn-off moment phase-shift angle are selected such that during a period when the switching tube in the secondary side switching unit is turned on, a current in the secondary side switching unit is reversed, and at the same time, a voltage withstood by the secondary winding of the transformer is reversed to form a reverse voltage.

Furthermore, the control unit includes: a frequency control module which receives the first sampling signal and a reference signal, and is configured to generate a first frequency signal according to the first sampling signal and the reference signal; a first driving module which receives the first frequency signal and generates the first switch driving signal; a phase-shift control module which receives the first frequency signal and the second sampling signal, obtains the turn-on moment phase-shift angle and the turn-off moment phase-shift angle according to the second sampling signal, delays the turn-on moment of the first switch driving signal by the turn-on moment phase-shift angle and delays the turn-off moment of the first switch driving signal by the turn-off moment phase-shift angle to obtain a second frequency signal; and a second driving module which receives the second frequency signal and generates the second switch driving signal. Furthermore, a current in the secondary side switching unit is reversed during a period of the turn-off moment phase-shift angle.

Furthermore, the switching tubes in the secondary side switching unit are low-voltage Si switching devices, SiC switching devices or GaN switching devices, and when a gain of the power converter is less than 1, the turn-on moment phase-shift angle is greater than the turn-off moment phase-shift angle.

Furthermore, a current in the secondary side switching unit is reversed during a period of the turn-on moment phase-shift angle.

Furthermore, a direction of a current in the secondary side switching unit remains unchanged during a period of the turn-off moment phase-shift angle.

Furthermore, the switching tubes in the secondary side switching unit are low-voltage Si switching devices, SiC switching devices or GaN switching devices, and when a gain of the power converter is less than 1, the turn-on moment phase-shift angle is greater than the turn-off moment phase-shift angle, and the turn-off moment phase-shift angle is equal to zero.

Furthermore, a current in the secondary side switching unit is reversed during a period of the turn-on moment phase-shift angle.

Furthermore, the switching tubes in the secondary side switching unit are high-voltage Si switching devices, and when a gain of the power converter is less than 1, the switching tubes in the secondary side switching unit are turned off.

Furthermore, the second sampling signal includes an input voltage, an output voltage, and a load current, and when a gain of the power converter is greater than or equal to 1, the turn-on moment phase-shift angle and the turn-off moment phase-shift angle increase with the increase of the output voltage and the increase of the load current.

Furthermore, the second sampling signal includes the input voltage, the output voltage, and the load current, and when a gain of the power converter is less than 1, the turn-on moment phase-shift angle and the turn-off moment phase-shift angle increase with a decrease of the output voltage and an increase of the load current.

Furthermore, the primary side switching unit includes a first bridge arm comprising a switching tube Q11 and a switching tube Q12 connecting in series and a second bridge arm comprising a switching tube Q21 and a switching tube Q22 connecting in series, the secondary side switching unit includes a first bridge arm comprising a switching tube Q31 and a switching tube Q32 connecting in series and a second bridge arm comprising a switching tube Q41 and a switching tube Q42 connecting in series, wherein the first switch driving signal controls the switching tube Q11 and the switching tube Q22 to be turned on or turned off simultaneously and the switching tube Q12 and the switching tube Q21 to be turned on or turned off simultaneously, the second switch driving signal controls the switching tube Q31 and the switching tube Q42 to be turned on or turned off simultaneously and the switching tube Q32 and the switching tube Q41 to be turned on or turned off simultaneously, a turn-on moment of the switching tube Q31 and the switching tube Q42 is delayed by the turn-on moment phase-shift angle relative to a turn-on moment of the switching tube Q12 and the switching tube Q21, a turn-off moment of the switching tube Q31 and the switching tube Q42 is delayed by the turn-off moment phase-shift angle relative to a turn-off moment of the switching tube Q12 and the switching tube Q21, a turn-on moment of the switching tube Q32 and the switching tube Q41 is delayed by the turn-on moment phase-shift angle relative to a turn-on moment of the switching tube Q11 and the switching tube Q22, and a turn-off moment of the switching tube Q32 and the switching tube Q41 is delayed by the turn-off moment phase-shift angle relative to a turn-off moment of the switching tube Q11 and the switching tube Q22.

Furthermore, the primary side switching unit includes a first bridge arm comprising a switching tube Q11 and a switching tube Q12 connecting in series, the secondary side switching unit includes a first bridge arm comprising a switching tube Q31 and a switching tube Q32 connecting in series, wherein a turn-on moment of the switching tube Q31 is delayed by the turn-on moment phase-shift angle relative to a turn-on moment of the switching tube Q12, a turn-off moment of the switching tube Q31 is delayed by the turn-off moment phase-shift angle relative to a turn-off moment of the switching tube Q12, a turn-on moment of the switching tube Q32 is delayed by the turn-on moment phase-shift angle relative to a turn-on moment of the switching tube Q11, and a turn-off moment of the switching tube Q32 is delayed by the turn-off moment phase-shift angle relative to a turn-off moment of the switching tube Q11.

The present application also provides a power conversion system, including the power conversion device mentioned above.

### BRIEF DESCRIPTION OF THE DRAWINGS

FIG. 1 is a schematic diagram of a power conversion device according to an embodiment of the present disclosure.
FIG. 2 is a schematic diagram of a power conversion device according to another embodiment of the present disclosure.
FIG. 3 is a waveform diagram of a control principle when a gain of a power converter is greater than or equal to 1 according to an embodiment of the present disclosure.
FIG. 4 is a schematic diagram of a power conversion device according to another embodiment of the present disclosure.
FIG. 5 is a waveform diagram of a control principle when switching tubes in a secondary side switching unit are low-voltage switching devices and a gain of the power converter is less than 1 according to an embodiment of the present disclosure.
FIG. 6 is a waveform diagram of a control principle when switching tubes in a secondary side switching unit are low-voltage switching devices and a gain of the power converter is less than 1 according to another embodiment of the present disclosure.
FIG. 7 is a waveform diagram of a control principle when switching tubes in a secondary side switching unit are high-voltage switching devices and a gain of the power converter is less than 1 according to an embodiment of the present disclosure.
FIG. 8 is a schematic diagram of a corresponding relationship between a second sampling signal and a turn-on moment phase-shift angle and a turn-off moment phase-shift angle when a gain of the power converter is greater than or equal to 1 according to an embodiment of the present disclosure.
FIG. 9 is a schematic diagram of a corresponding relationship between a turn-on moment phase-shift angle and the second sampling signal when a gain of the power converter is less than 1 according to an embodiment of the present disclosure.
FIG. 10 is a schematic diagram of a corresponding relationship between a turn-off moment phase-shift angle and the second sampling signal when a gain of the power converter is less than 1 according to an embodiment of the present disclosure.
FIG. 11 is a schematic diagram of a power conversion system according to an embodiment of the present disclosure.

### DETAILED DESCRIPTION

The technical solutions in the present disclosure will be described clearly and completely with reference to the accompanying drawings, and it is obvious that the described embodiments are some, but not all of embodiments of the present disclosure. Based on the embodiments in the present disclosure, all other embodiments obtained by those of ordinary skill in the art without any creative work belong to the scope of protection of the present disclosure.

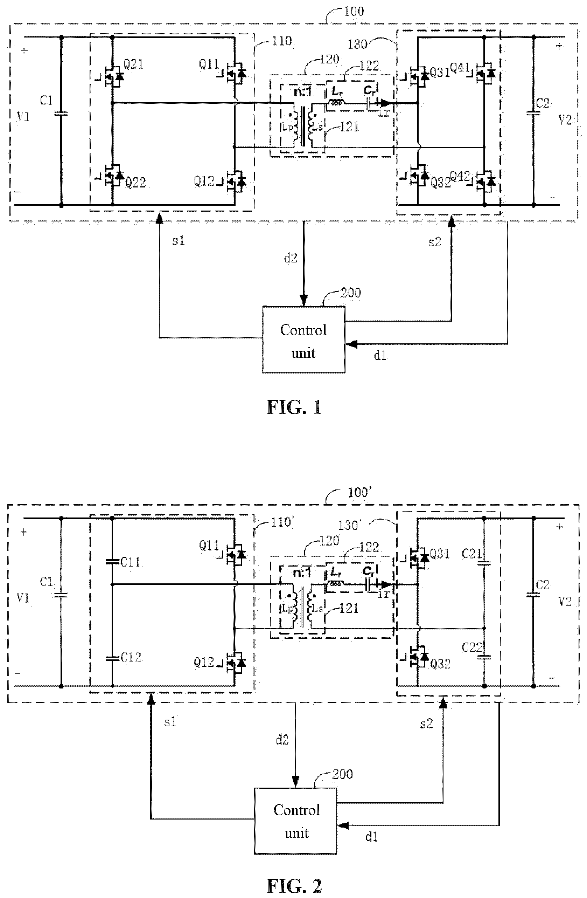

In one embodiment of the present disclosure, a power conversion device is provided. Please refer to FIG. 1, which shows a schematic diagram of a power conversion device according to an embodiment of the present disclosure. The power conversion device according to an embodiment of the present disclosure includes:
a power converter 100 including: a resonant circuit 120, wherein the resonant circuit includes a transformer 121 and a resonant unit 122, the transformer 121 includes a primary winding Lp and a secondary winding Ls; a primary side switching unit 110, including at least one switching tube, wherein the primary side switching unit 110 is connected to both ends of the primary winding Lp, and a first voltage V1 is formed at both ends of the primary side switching unit 110; a secondary side switching unit 130, including at least one switching tube, wherein the secondary side switching unit 130 is connected to both ends of the secondary winding Ls, and a second voltage V2 is formed at both ends of the secondary side switching unit 130, wherein the resonant unit 122 is connected between any end of the primary winding Lp and the primary side switching unit 110 or between any end of the secondary winding Ls and the secondary side switching unit 130; and
a control unit 200 which receives a first sampling signal d1 representing a state of the power converter 100 and a second sampling signal d2 representing a state of the power converter, and is configured to: generate a first switch driving signal s1 for controlling the switching tube in the primary side switching unit 110 to be turned on or off according to the first sampling signal d1, obtain a turn-on moment phase-shift angle and a turn-off moment phase-shift angle according to the second sampling signal d2, and delay a turn-on moment of the first switch driving signal s1 by the turn-on moment phase-shift angle and delay a turn-off moment of the first switch driving signal s1 by the turn-off moment phase-shift angle so as to obtain a second switch driving signal s2 for controlling turn-on or turn-off of the switching tube in the secondary side switching unit 130, wherein when a gain of the power converter 100 is greater than or equal to 1, the turn-on moment phase-shift angle is equal to the turn-off moment phase-shift angle, and the turn-on moment phase-shift angle and the turn-off moment phase-shift angle are selected such that during a period when the switching tube in the secondary side switching unit 130 is turned on, a current in the secondary side switching unit 130 is reversed, and at the same time, a voltage withstood by the secondary winding of the transformer is reversed to form a reverse voltage.

In a practical application in one embodiment, as shown in FIG. 1, the primary side switching unit 110 and the secondary side switching unit 130 are full-bridge switching units, the power converter 100 forms a resonant full-bridge converter. Specifically, the primary side switching unit 110 includes a first bridge arm including a switching tube Q11 and a switching tube Q12 connecting in series, and a second bridge arm including a switching tube Q21 and a switching tube Q22 connecting in series, wherein the first bridge arm and the second bridge arm are connected in parallel, a common node of the switching tube Q21 and the switching tube Q22 is connected to a first end of the primary winding Lp, a common node of the switching tube Q11 and the switching tube Q12 is connected to a second end of the primary winding Lp, and a first capacitor C1 is connected with the first bridge arm and the second bridge arm in parallel. The secondary side switching unit 130 includes a first bridge arm including a switching tube Q31 and a switching tube Q32 connecting in series, and a second bridge arm including a switching tube Q41 and a switching tube Q42 connecting in series, wherein the first bridge arm and the second bridge arm are connected in parallel, a common node of the switching tube Q31 and the switching tube Q32 is connected to a first end of the secondary winding Ls, a common node of the switching tube Q41 and the switching tube Q42 is connected to a second end of the secondary winding Ls, and a second capacitor C2 is connected with the first bridge arm and the second bridge arm in parallel.

In a practical application in one embodiment, Please refer to FIG. 2, which shows a schematic diagram of a power conversion device according to another embodiment of the present disclosure, a primary side switching unit 110' and a secondary side switching unit 130' are half-bridge switching units, the power converter 100' forms a resonant half-bridge converter. Specifically, the primary side switching unit 110' includes a first bridge arm including a switching tube Q11 and a switching tube Q12 connecting in series, and a second bridge arm including a capacitor C11 and a capacitor C12 connecting in series, wherein the first bridge arm and the second bridge arm are connected in parallel, a common node of the capacitor C11 and the capacitor C12 is connected to a first end of the primary winding Lp, a common node of the switching tube Q11 and the switching tube Q12 is connected to a second end of the primary winding Lp, and a first capacitor C1 is connected with the first bridge arm and the second bridge arm in parallel. The secondary side switching unit 130' includes a first bridge arm including a switching tube Q31 and a switching tube Q32 connecting in series, and a second bridge arm including a capacitor C21 and a capacitor C22 connecting in series, wherein the first bridge arm and the second bridge arm are connected in parallel, a common node of the switching tube Q31 and the switching tube Q32 is connected to a first end of the secondary winding Ls, a common node of the capacitor C21 and the capacitor C22 is connected to a second end of the secondary winding Ls, and a second capacitor C2 is connected with the first bridge arm and the second bridge arm in parallel.

As shown in FIGS. 1 and 2, the resonant unit 122 includes a resonant inductor Lr and a resonant capacitor Cr connecting in series, but the present disclosure does not limit the specific structure of the resonant unit 122, as long as it can be formed as a resonant unit.

As shown in FIG. 1, the resonant unit 122 is connected between the first end of the secondary winding Ls and the common node of the switching tube Q31 and the switching tube Q32. In a practical application, the resonant unit 122 can be connected between any end of the primary winding Lp and the primary side switching unit 110, or between any end of the secondary winding Ls and the secondary side switching unit 130.

As shown in FIG. 2, the resonant unit 122 is connected between the first end of the secondary winding Ls and the common node of the switching tube Q31 and the switching tube Q32. In a practical application, the resonant unit 122 can be connected between any end of the primary winding Lp and the primary side switching unit 110', or between any end of the secondary winding Ls and the secondary side switching unit 130'.

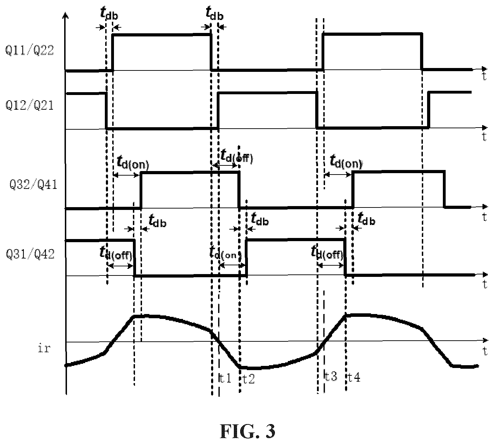

As an example below, the primary side switching unit 110 and the secondary side switching unit 130 as full-bridge switching units and a direction of a current flowing from the first end of the secondary winding Ls to the secondary side switching unit 130 as a forward current. Please refer to FIG. 3 which shows a diagram of a waveform of the power converter when a gain of the power converter is greater than or equal to 1 according to an embodiment of the present disclosure, the first switch driving signal s1 controls the switching tube Q11 and the switching tube Q22 in the primary side switch unit 110 to be turned on or turned off simultaneously, and the switching tube Q12 and the switching tube Q21 to be turned on or turned off simultaneously, a second switch driving signal s2 controls the switching tube Q31 and the switching tube Q42 in the secondary side switching unit 130 to be turned on or turned off simultaneously, and the switching tube Q32 and the switching tube Q41 to be turned on or turned off simultaneously, a dead time tdb exists between the switching tube Q11 and the switching tube Q22 and the switching tube Q12 and the switching tube Q21, and a dead time tdb also exists between the switching tube Q31 and the switching tube Q42 and the switching tube Q32 and the switching tube Q41. As shown in FIG. 3, a turn-on moment of the switching tube Q31 and the switching tube Q42 is delayed by a turn-on moment phase-shift angle td(on) relative to a turn-on moment of the switching tube Q12 and the switching tube Q21, a turn-off moment of the switching tube Q31 and the switching tube Q42 is delayed by a turn-off moment phase-shift angle td(off) relative to a turn-off moment of the switching tube Q12 and the switching tube Q21, a turn-on moment of the switching tube Q32 and the switching tube Q41 is delayed by the turn-on moment phase-shift angle td(on) relative to a turn-on moment of the switching tube Q11 and the switching tube Q22, a turn-off moment of the switching tube Q32 and the switching tube Q41 is delayed by the turn-off moment phase-shift angle td(off) relative to a turn-off moment of the switching tube Q11 and the switching tube Q22; and when a gain of a power converter 100 is greater than or equal to 1, that is, V1≦V2*n (n is a transformation ratio of the transformer), as shown in FIG. 3, the turn-on moment phase-shift angle td(on) is equal to the turn-off moment phase-shift angle td(off), and the turn-on moment phase-shift angle td(on) and the turn-off moment phase-shift angle td(off) are selected such that during a period when the switching tubes in the secondary side switching unit 130 are turned on, a current in the secondary side switching unit 130 is reversed. As shown in FIG. 3, a current ir in the secondary side switching unit 130 changes from a forward direction to a reverse direction during a period when the switching tube Q32 and the switching tube Q41 are turned on. As shown in FIG. 3, the current ir crosses zero at a moment t1, the voltage withstood by the secondary winding of the transformer is reversed from the moment t1 to a moment t2, forming a reverse voltage; similarly, next, during a period when the switching tube Q31 and the switching tube Q42 are turned on, the current ir changes from the reverse direction to the forward direction. As shown in FIG. 3, the current ir crosses zero at a moment t3, the voltage withstood by the secondary winding of the transformer is reversed from the moment t3 to a moment t4, forming a reverse voltage. In this way, an output voltage range can be expanded. And, the reverse voltage generated makes the voltage of the common node of the first bridge arm in the secondary side switching unit 130 reversely jump relative to the voltage of the common node of the second bridge arm in the secondary side switching unit 130 to avoid the generation of common-mode interference, so that the power conversion device provided by the present application has good EMI characteristics.

For the primary side switching unit 110 and the secondary side switching unit 130 being half-bridge switching units, a turn-on moment of the switching tube Q31 is delayed by the turn-on moment phase-shift angle td(on) relative to a turn-on moment of the switching tube Q12, a turn-off moment of the switching tube Q31 is delayed by the turn-off moment phase-shift angle td(off) relative to a turn-off moment of the switching tube Q12, a turn-on moment of the switching tube Q32 is delayed by the turn-on moment phase-shift angle td(on) relative to a turn-on moment of the switching tube Q11, and a turn-off moment of the switching tube Q32 is delayed by the turn-off moment phase-shift angle td(off) relative to a turn-off moment of the switching tube Q11. Its principle and effect are the same as those of the above-mentioned full-bridge switching units, and are omitted here.

As shown in FIG. 3, the turn-on moment phase-shift angle td(on) and the turn-off moment phase-shift angle td(off) are selected such that during a period when the switching tubes in the secondary side switching unit 130 are turned on, a current in the secondary side switching unit 130 is reversed, thus avoiding the influence of current zero-crossing point on the driving of the switching tubes in the secondary side switching unit 130, and there is no need to consider the problem of current zero-crossing point in a subsequent control process. This is because the current zero-crossing point is easily influenced by detection noise, which leads to be misjudged, and then produces wrong switch driving signals. According to the present disclosure, the influence of current zero-crossing point can be avoided by selecting appropriate turn-on moment phase-shift angle td(on) and turn-off moment phase-shift angle td(off), so that the method is simple and the reliability is high. And, as shown in FIG. 3, at the turn-on moment of all the switching tubes, the current flows through body diodes of the switching tubes, thus ZVS soft switching is realized, and the power converter provided by the present application has high efficiency.

Furthermore, referring to FIG. 3 again, during a period of the turn-off moment phase-shift angle td(off), a current in the secondary side switching unit 130 is reversed. In this way, during a period of the turn-off moment phase-shift angle td(off), the voltage withstood by the secondary winding of the transformer is reversed to form a reverse voltage. That is, the selected turn-on moment phase-shift angle td(on) and turn-off moment phase-shift angle td(off) need to be large enough until a current in the secondary side switching unit 130 is reversed during the period of the turn-off moment phase-shift angle td(off), and the voltage withstood by the secondary winding of the transformer can be reversed to form the reverse voltage, to ensure that the output voltage range can be expanded and the power converter has good EMI characteristics.

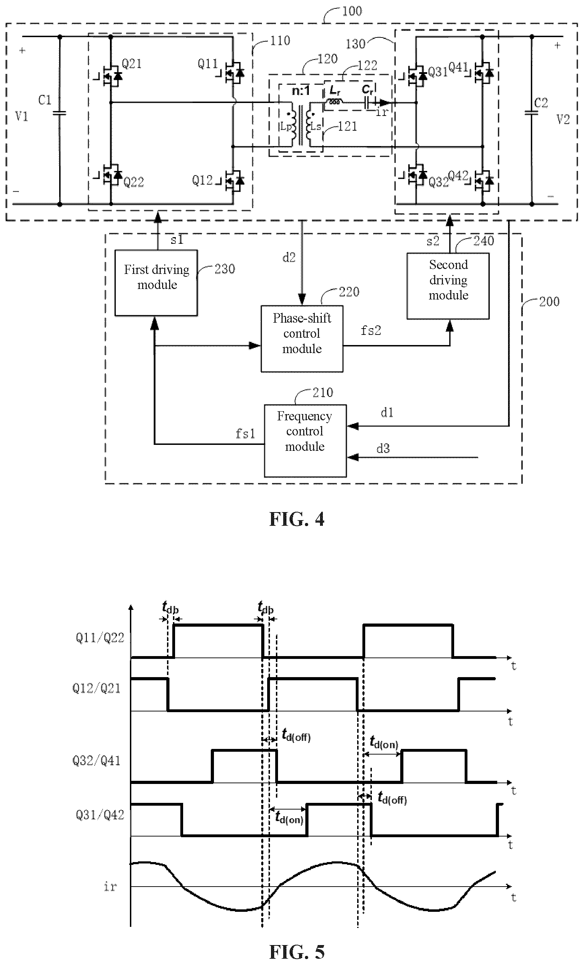

Furthermore, with reference to FIG 4, which shows a schematic diagram of a power conversion device according to another embodiment of the present disclosure, the control unit 200 includes: a frequency control module 210 which receives the first sampling signal d1 and a reference signal d3, and is configured to generate a first frequency signal fs1 according to the first sampling signal d1 and the reference signal d3; a first driving module 230 which receives the first frequency signal fs1 and generates a first switch driving signal s1; a phase-shift control module 220 which receives the first frequency signal fs1 and the second sampling signal d2, obtains the turn-on moment phase-shift angle td(on) and the turn-off moment phase-shift angle td(off) according to the second sampling signal d2, delays the turn-on moment of the first frequency signal fs1 (which means delaying the turn-on moment of the first switch driving signal s1) by the turn-on moment phase-shift angle td(on) and delays the turn-off moment of the first frequency signal fs1 (which means delaying the turn-off moment of the first switch driving signal s1) by the turn-off moment phase-shift angle td(off) to obtain a second frequency signal fs2; and a second driving module 240 which receives the second frequency signal fs2 and generates the second switch driving signal s2.

In a practical application in one embodiment, for some application scenarios, such as a server power supply, the switching tubes in the secondary side switching unit 130 are low-voltage switching devices, and the low-voltage device refers to a switching device with a withstand voltage of less than 200V, such as a silicon MOS transistor with a withstand voltage of 100V or 60 V. At present, the commonly used low-voltage switching devices in the market include third-generation semiconductor devices such as SiC switching devices and GaN switching devices or low-voltage Si switching devices. When a gain of the power converter is less than 1, the selected turn-on moment phase-shift angle td(on) is greater than the turn-off moment phase-shift angle td(off). Specifically, with reference to FIG. 5, which shows a waveform diagram of a control principle when switching tubes in a secondary side switching unit are low-voltage switching devices and a gain of the power converter is less than 1 according to an embodiment of the present disclosure, the turn-on moment phase-shift angle td(on) is selected such that a current in the secondary side switching unit is reversed during a period of the turn-on moment phase-shift angle td(on), that is, after the current crosses zero, the switching tubes in the secondary side switching unit are turned on to avoid the influence of the current zero-crossing point on the control of the switching tubes. In addition, when a gain of the power converter is less than 1, phase angles of both the voltage and current of the power converter are very large. For the low-voltage device, because the turn-on voltage drop of the low-voltage device is relatively low, the loss caused by the current flowing through its body diode is relatively large. Thus, it is desired that the time for the current flowing through its body diode will be shortened as much as possible to improve the efficiency of the power converter. As shown in FIG. 5, a certain turn-off moment phase-shift angle td(off) is selected to reduce the time for the current to flow through its body diode to improve the efficiency of the power converter, and the selected turn-on moment phase-shift angle td(on) makes a current in the secondary side switching unit reverse during a period of the turn-on moment phase-shift angle td(on), and during a period of the turn-off phase-shift angle td(off), a direction of a current in the secondary side switching unit 130 remains unchanged, thus avoiding the influence of the current zero-crossing point on the control of the switching tube, and achieving simple control and high reliability while improving the efficiency.

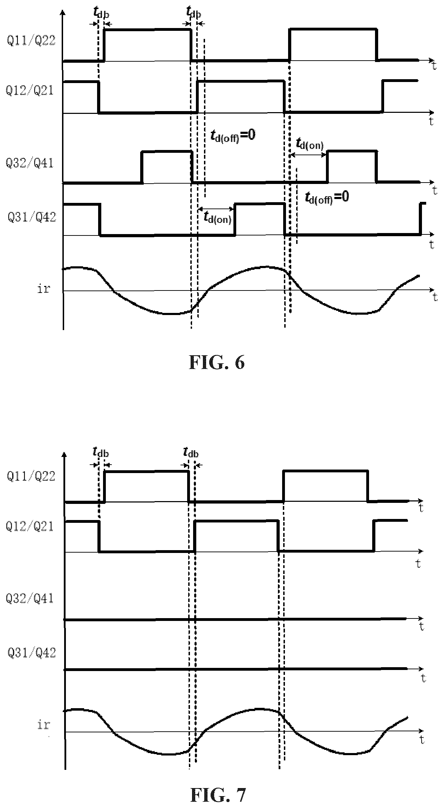

In a practical application in one embodiment, for some application scenarios, the switching tubes in the secondary side switching unit 130 are low-voltage Si switching devices, SiC switching devices or GaN switching devices, and load currents in a working range are all large, such as a charger, which operates under a light load for a short time and operates under a full load most of the time. In this case, with reference to FIG. 6, which shows a waveform diagram of a control principle when switching tubes in a secondary side switching unit are low-voltage switching devices and a gain of the power converter is less than 1 according to another embodiment of the present disclosure, the turn-on moment phase-shift angle td(on) is selected such that a current in the secondary side switching unit 130 is reversed during a period of the turn-on moment phase-shift angle td(on), so as to avoid the influence of current zero-crossing point on the control of the switching tube, and the turn-off moment phase-shift angle td(off) is equal to zero; and as shown in FIG. 6, the switching tubes in the primary side switching unit 110 and the switching tubes in the secondary side switching unit 130 are turned off at the same time, so as to balance the control complexity and efficiency.

In a practical application in one embodiment, for some application scenarios, the switching tubes in the secondary side switching unit 130 are high-voltage Si switching devices, and the high-voltage device refers to a switching device with a withstand voltage of greater than 600V, such as a silicon MOS transistor with a withstand voltage of 600V or 650V. When a gain of the power converter is less than 1, the switching tubes in the secondary side switching unit 130 are turned off all the time, then the turn-on moment phase-shift angle td(on) and the turn-off moment phase-shift angle td(off) are zero. Specifically, reference may be made to FIG. 7, which shows a waveform diagram of a control principle when switching tubes in a secondary side switching unit are high-voltage switching devices and a gain of the power converter is less than 1 according to an embodiment of the present disclosure. When the switching tubes in the secondary side switching unit are the high-voltage Si switching devices, a voltage drop of a body diode of the switching tube is lower than its turn-on voltage drop, so that the loss caused by current flowing through its body diode is minimal. Therefore, in order to achieve simplest control and highest efficiency, the switching tubes in the secondary side switching unit 130 are turned off all the time, and a secondary side current flows through the body diodes of the switching tubes in the secondary side switching unit 130.

In a practical application in one embodiment, the first sampling signal d1 may be an output voltage of the power converter 100, that is, a second voltage V2, the reference signal d3 may be a reference voltage Vref, and the control unit 200 or the frequency control module 210 generates the first frequency signal fs1 according to the second voltage V2 and the reference voltage Vref. The present disclosure does not limit specific structures and implementations of the control unit 200 and the frequency control module 210, and any existing structure that can obtain the first frequency signal fs1 according to the sampling signal and the reference signal representing the state of the power converter 100 is applicable to the present disclosure. Moreover, the present disclosure is not limited to the first sampling signal d1 being only the output voltage, and it may also include signals such as the load current.

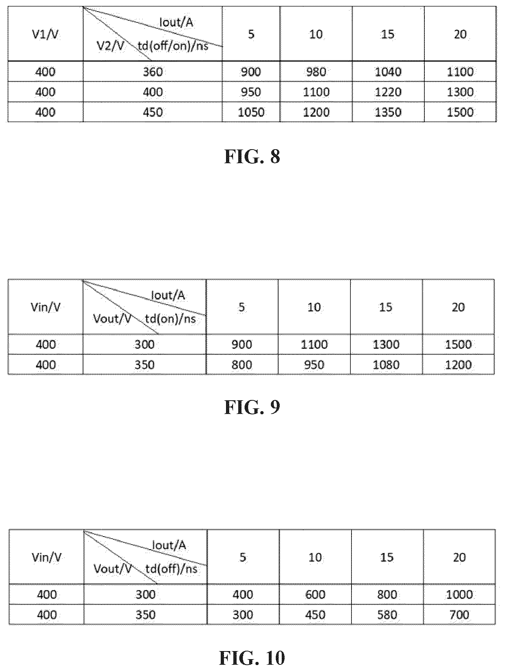

In an embodiment of the present disclosure, the second sampling signal d2 includes the input voltage, the output voltage, and the load current of the power converter 100, then the control unit 200 or the phase-shift control module 220 obtains the turn-on moment phase-shift angle td(on) and the turn-off moment phase-shift angle td(off) according to the second sampling signal d2. Specifically, the control unit 200 or the phase-shift control module 220 obtains the turn-on moment phase-shift angle td(on) and the turn-off moment phase-shift angle td(off) according to the input voltage, the output voltage and the load current of the power converter 100. Specifically, in a practical application, firstly, different turn-on moment phase-shift angles td(on) and turn-off moment phase-shift angles td(off) are obtained from different input voltages, output voltages and load currents through an open-loop test, and an array or database in which the input voltages, the output voltages and the load currents correspond to the turn-on moment phase-shift angles td(on) and turn-off moment phase-shift angles td(off) is formed, and then the array or database is written into the phase-shift control module 210; and in actual operation, the corresponding turn-on moment phase-shift angle td(on) and turn-off moment phase-shift angle td(off) are obtained in real time according to the measured second sampling signal d2 (such as the input voltage, the output voltage and the load current). Reference may be made to FIG. 8, which shows a schematic diagram of a corresponding relationship between a second sampling signal and a turn-on moment phase-shift angle and a turn-off moment phase-shift angle when a gain of the power converter is greater than or equal to 1 according to an embodiment of the present disclosure. As shown in FIG. 8, when a gain of the power converter is greater than or equal to 1, the turn-on moment phase-shift angle td(on) and the turn-off moment phase-shift angle td(off) increase with the increase of the output voltage and the increase of the load current. Reference may be made to FIG. 9, which shows a schematic diagram of a corresponding relationship between a turn-on moment phase-shift angle and the second sampling signal when a gain of the power converter is less than 1 according to an embodiment of the present disclosure, and reference may be made to FIG. 10, which shows a schematic diagram of a corresponding relationship between a turn-off moment phase-shift angle and the second sampling signal when a gain of the power converter is less than 1 according to an embodiment of the present disclosure. As shown in FIGS. 9 and 10, when a gain of the power converter is less than 1, the turn-on moment phase-shift angle td(on) and the turn-off moment phase-shift angle td(off) increase with a decrease of the output voltage and an increase of the load current.

In an embodiment of the present application, the control unit 200 in FIG. 1 and the frequency control module 210, the first driving module 230, the phase-shift control module 220 and the second driving module 240 in FIG. 4 can be realized by analog circuits or digital control, which is not limited in the present disclosure.

In an embodiment of the present application, as shown in FIGS. 1 and 2, a primary side switching unit 110 is connected between both ends of a first capacitor C1 and both ends of the primary winding Lp, and a first voltage V1 is formed between the both ends of the first capacitor C1; and a secondary side switching unit 130 is connected between both ends of the second capacitor C2 and both ends of the secondary winding 130, and a second voltage V2 is formed between the both ends of the second capacitor C2.

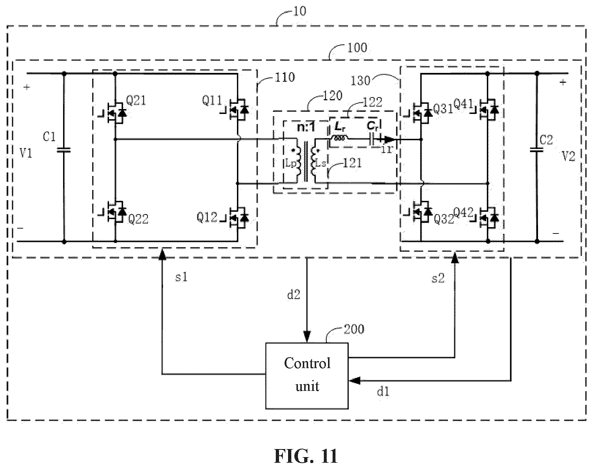

In an embodiment of the present application, there is also provided a power conversion system 10, including the power conversion device mentioned above. Specifically, reference may be made to FIG. 11, which shows a schematic diagram of a power conversion system according to an embodiment of the present disclosure.

Its working principle and effect are the same as those mentioned above, and are omitted here.

Finally, it should be noted that the above embodiments are only used to illustrate the technical solutions of the present disclosure, and not to limit the same; while the present disclosure has been described in detail with reference to the foregoing embodiments, it will be understood by those skilled in the art that the technical solutions described in the foregoing embodiments may still be modified, or some or all of the technical features may be equivalently substituted; and these modifications or substitutions do not make the essence of the corresponding technical solutions deviate from the scope of the technical solutions of various embodiments of the present disclosure.

## Claims

1. A power conversion device, comprising:
a power converter(100) comprising: a resonant circuit(120), wherein the resonant circuit(120) comprises a transformer(121) and a resonant unit(122), the transformer(121) comprises a primary winding(Lp) and a secondary winding(Ls); a primary side switching unit(110), wherein the primary side switching unit(110) comprises at least one switching tube and is connected to both ends of the primary winding(Lp), and a first voltage(V1) is formed at both ends of the primary side switching unit(110); a secondary side switching unit(130), wherein the secondary side switching unit(130) comprises at least one switching tube and is connected to both ends of the secondary winding(Ls), and a second voltage(V2) is formed at both ends of the secondary side switching unit(130), wherein the resonant unit(122) is connected between any end of the primary winding(Lp) and the primary side switching unit(110) or between any end of the secondary winding(Ls) and the secondary side switching unit(130); and
a control unit(200) which receives a first sampling signal(d1) representing a state of the power converter(100) and a second sampling signal(d2) representing a state of the power converter(100), and is configured to: generate a first switch driving signal(s1) for controlling the switching tube in the primary side switching unit(110) to be turned on or off according to the first sampling signal(d1), obtain a turn-on moment phase-shift angle(td(on)) and a turn-off moment phase-shift angle(td(off)) according to the second sampling signal(d2), and delay a turn-on moment of the first switch driving signal(s1) by the turn-on moment phase-shift angle(td(on)) and delay a turn-off moment of the first switch driving signal(s1) by the turn-off moment phase-shift angle(td(off)) so as to obtain a second switch driving signal(s2) for controlling turn-on or turn-off of the switching tube in the secondary side switching unit(130), wherein when a gain of the power converter(100) is greater than or equal to 1, the turn-on moment phase-shift angle(td(on)) is equal to the turn-off moment phase-shift angle(td(off)), and the turn-on moment phase-shift angle(td(on)) and the turn-off moment phase-shift angle(td(off)) are selected such that during a period when the switching tube in the secondary side switching unit(130) is turned on, a current in the secondary side switching unit(130) is reversed, and at the same time, a voltage withstood by the secondary winding(Ls) of the transformer(121) is reversed to form a reverse voltage.

2. The power conversion device according to claim 1, wherein the control unit(200) comprises:
a frequency control module(210) which receives the first sampling signal(d1) and a reference signal(d3), and is configured to generate a first frequency signal(fs1) according to the first sampling signal(d1) and the reference signal(d3);
a first driving module(230) which receives the first frequency signal(fs1) and generates the first switch driving signal(s1);
a phase-shift control module(220) which receives the first frequency signal(fs1) and the second sampling signal(d2), obtains the turn-on moment phase-shift angle(td(on)) and the turn-off moment phase-shift angle(td(off)) according to the second sampling signal(d2), delays the turn-on moment of the first frequency signal(fs1) by the turn-on moment phase-shift angle(td(on)) and delays the turn-off moment of the first frequency signal(fs1) by the turn-off moment phase-shift angle(td(off)) to obtain a second frequency signal(fs2); and
a second driving module(240) which receives the second frequency signal((fs2)) and generates the second switch driving signal(s2).

3. The power conversion device according to claim 1, wherein a current in the secondary side switching unit(130) is reversed during a period of the turn-off moment phase-shift angle(td(off)).

4. The power conversion device according to claim 1, wherein the switching tubes in the secondary side switching unit(130) are low-voltage Si switching devices, SiC switching devices or GaN switching devices, and when a gain of the power converter(100) is less than 1, the turn-on moment phase-shift angle(td(on)) is greater than the turn-off moment phase-shift angle(td(off)).

5. The power conversion device according to claim 4, wherein a current in the secondary side switching unit(130) is reversed during a period of the turn-on moment phase-shift angle(td(on)).

6. The power conversion device according to claim 4, wherein a direction of a current in the secondary side switching unit(130) remains unchanged during a period of the turn-off moment phase-shift angle(td(off)).

7. The power conversion device according to claim 1, wherein the switching tubes in the secondary side switching unit(130) are low-voltage Si switching devices, SiC switching devices or GaN switching devices, and when a gain of the power converter(100) is less than 1, the turn-on moment phase-shift angle(td(on)) is greater than the turn-off moment phase-shift angle(td(off)), and the turn-off moment phase-shift angle(td(off)) is equal to zero.

8. The power conversion device according to claim 7, wherein a current in the secondary side switching unit(130) is reversed during a period of the turn-on moment phase-shift angle(td(on)).

9. The power conversion device according to claim 1, wherein the switching tubes in the secondary side switching unit(130) are high-voltage Si switching devices, and when a gain of the power converter(100) is less than 1, the switching tubes in the secondary side switching unit(130) are turned off.

10. The power conversion device according to claim 1, wherein the second sampling signal(d2) comprises an input voltage, an output voltage, and a load current, and when a gain of the power converter(100) is greater than or equal to 1, the turn-on moment phase-shift angle(td(on)) and the turn-off moment phase-shift angle(td(off)) increase with an increase of the output voltage and an increase of the load current.

11. The power conversion device according to claim 1 or 10, wherein the second sampling signal(d2) comprises an input voltage, an output voltage, and a load current, and when the gain of the power converter(100) is less than 1, the turn-on moment phase-shift angle(td(on)) and the turn-off moment phase-shift angle(td(off)) increase with a decrease of the output voltage and an increase of the load current.

12. The power conversion device according to claim 1, wherein the primary side switching unit(110) comprises a first bridge arm comprising a switching tube Q11 and a switching tube Q12 connecting in series and a second bridge arm comprising a switching tube Q21 and a switching tube Q22 connecting in series, the secondary side switching unit(130) comprises a first bridge arm comprising a switching tube Q31 and a switching tube Q32 connecting in series and a second bridge arm comprising a switching tube Q41 and a switching tube Q42 connecting in series, wherein the first switch driving signal(s1) controls the switching tube Q11 and the switching tube Q22 to be turned on or turned off simultaneously and the switching tube Q12 and the switching tube Q21 to be turned on or turned off simultaneously, the second switch driving signal(s2) controls the switching tube Q31 and the switching tube Q42 to be turned on or turned off simultaneously and the switching tube Q32 and the switching tube Q41 to be turned on or turned off simultaneously, a turn-on moment of the switching tube Q31 and the switching tube Q42 is delayed by the turn-on moment phase-shift angle(td(on)) relative to a turn-on moment of the switching tube Q12 and the switching tube Q21, a turn-off moment of the switching tube Q31 and the switching tube Q42 is delayed by the turn-off moment phase-shift angle(td(off)) relative to a turn-off moment of the switching tube Q12 and the switching tube Q21, a turn-on moment of the switching tube Q32 and the switching tube Q41 is delayed by the turn-on moment phase-shift angle(td(on)) relative to a turn-on moment of the switching tube Q11 and the switching tube Q22, and a turn-off moment of the switching tube Q32 and the switching tube Q41 is delayed by the turn-off moment phase-shift angle(td(off)) relative to a turn-off moment of the switching tube Q11 and the switching tube Q22.

13. The power conversion device according to claim 1, wherein the primary side switching unit(110) comprises a first bridge arm comprising a switching tube Q11 and a switching tube Q12 connecting in series, the secondary side switching unit(130) comprises a first bridge arm comprising a switching tube Q31 and a switching tube Q32 connecting in series, wherein a turn-on moment of the switching tube Q31 is delayed by the turn-on moment phase-shift angle(td(on)) relative to a turn-on moment of the switching tube Q12, a turn-off moment of the switching tube Q31 is delayed by the turn-off moment phase-shift angle(td(off)) relative to a turn-off moment of the switching tube Q12, a turn-on moment of the switching tube Q32 is delayed by the turn-on moment phase-shift angle(td(on)) relative to a turn-on moment of the switching tube Q11, and a turn-off moment of the switching tube Q32 is delayed by the turn-off moment phase-shift angle(td(off)) relative to a turn-off moment of the switching tube Q11.

14. A power conversion system, comprising: the power conversion device according to claim 1.
